# FASCICULE DE BREVET EUROPEEN

(11) **EP 2 979 435 B1**
(45) Date de publication et mention de la délivrance du brevet: **07.08.2019**
(21) Numéro de dépôt: 14719200.9
(22) Date de dépôt: 26.03.2014
(51) Int. Cl.: H04L 29/08, H04L 29/06, H04L 29/12

(54) **PROCÉDÉ DE TRAITEMENT DE DONNÉS D'UTILISATEUR D'UN RÉSEAU SOCIAL**
VERFAHREN ZUR VERARBEITUNG VON DATEN EINES BENUTZERS EINES SOZIALEN NETZWERKS
METHOD FOR PROCESSING DATA OF A SOCIAL NETWORK USER

(30) Priorité: 29.03.2013 FR 1352947
(43) Date de publication de la demande: 03.02.2016
(73) Titulaire: Orange, 75015 Paris (FR)
(72) Inventeur: PUHARRE, Michel, F-92320 Chatillon (FR); PEREZ, Carlos, F-75015 Paris (FR)
(74) Mandataire: Cabinet Plasseraud
(86) Numéro de dépôt international: PCT/FR2014/050704
(87) Numéro de publication internationale: WO 2014/155003

(56) Documents cités:
- US-A1- 2010 088 364
- US-A1- 2010 088 364
- US-A1- 2010 088 364
- US-A1- 2011 035 503
- US-A1- 2011 035 503
- US-A1- 2011 035 503

## Description

La présente invention concerne un traitement de données d'utilisateur de réseau social dans le domaine des télécommunications, et plus particulièrement un procédé pour la gestion des données d'utilisateur destinées à un affichage sur une page internet du réseau social.

Un « réseau social » désigne ici une plateforme de mise en relation à disposition d'utilisateurs d'un réseau de communication tel qu'un réseau internet. Par l'intermédiaire de cette plateforme, des utilisateurs peuvent être réunis par un lien social défini dans une structure de mise en relation du réseau social.

Une structure de mise en relation peut prendre la forme notamment (mais non exclusivement) d'un réseau maillé par exemple selon une arborescence en graphe de noeuds représentant les utilisateurs. Les utilisateurs sont liés dans le graphe de noeuds si un lien social a été créé ou défini entre des utilisateurs déterminés. Ces relations sociales peuvent être établies et gérées par l'utilisateur lui-même ou par l'administrateur du réseau social.

Un réseau social est généralement hébergé sur une ou plusieurs entités informatiques, par exemple de type serveur. Ce serveur stocke et administre l'arborescence en graphe de noeuds du réseau social. Il stocke en outre les données d'utilisateur mises en lignes par chacun des utilisateurs du réseau social. Les utilisateurs chargent en effet leurs données utilisateur sur le serveur du réseau social afin qu'elles puissent être affichées sur la page internet du réseau social. Ainsi, les utilisateurs ayant un lien social au sein du graphe de noeuds peuvent consulter et se voir afficher les données d'utilisateur des utilisateurs qu'ils connaissent, via le serveur du réseau social.

Toutefois, il est aujourd'hui constaté que lorsqu'un utilisateur souhaite se désabonner d'un réseau social, par exemple en supprimant son compte et ses données personnelles, des données d'utilisateur peuvent rester encore visibles et accessibles au moins partiellement depuis ce réseau social ou, tout au moins, consultables depuis d'autres sources internet. Aussi, on comprendra qu'une insécurité des données existe aujourd'hui concernant les données d'utilisateur stockées sur les entités informatiques des réseaux sociaux.

En outre, la confidentialité des données publiées peut être compromise via des attaques pirates à l'encontre des serveurs du réseau social, lesquels peuvent accéder aux données d'utilisateur qui y sont stockées. Par ailleurs, certains administrateurs peu scrupuleux de réseaux sociaux peuvent être amenés à diffuser et à revendre des données d'utilisateur stockées sur leur serveur à des tiers, comme les coordonnées d'utilisateurs par exemple. Le document US2010088364 concernant le domaine des réseaux sociaux divulgue une architecture de réseau social dans laquelle l'hébergement des données de profil est fourni par le propriétaire du profil. Le document US2011035503 décrit un système et un procédé d'adressage anonyme de contenu stocké sur des ordinateurs situés en bordures de réseau.

La présente invention vient améliorer la situation.

L'invention est définie par les revendications indépendantes 1 (procédé) et 8 (programme).

Elle vise un procédé de traitement de données d'utilisateur destinées à un affichage sur une page internet d'un réseau social, dans lequel :
- lesdites données d'utilisateur sont stockées dans un premier dispositif communicant et sont consultables à distance par au moins un deuxième dispositif communicant,
- le réseau social est organisé selon un réseau maillé comportant une pluralité de noeuds, et un serveur hébergeant le réseau social associe à chaque noeud du réseau maillé un identifiant de dispositif communicant, un premier et un deuxième identifiant respectivement associés aux premier et deuxième dispositifs étant stockés auprès dudit serveur, et
- le serveur stocke en outre à l'identifiant du premier dispositif une adresse IP du premier dispositif sur un réseau de communication en cours d'utilisation par le premier dispositif.

Avantageusement, le procédé comprend alors, sur requête de consultation des données d'utilisateur par le deuxième dispositif, au moins les étapes :
- de vérification par le serveur que le réseau maillé comporte une relation entre les noeuds correspondant respectivement aux premier et deuxième identifiants ;
- et, le cas échéant, de transmission par le serveur de l'adresse IP du premier dispositif au deuxième dispositif, pour un accès direct auxdites données d'utilisateur auprès du premier dispositif et en utilisant l'adresse IP transmise;
- dans lequel le serveur répertorie en outre le premier dispositif à l'aide d'un identifiant unique propre au premier dispositif, une adresse IP courante du premier dispositif étant associée audit identifiant unique,
ledit procédé étant caractérisé en ce que l'identifiant unique propre au premier dispositif est un identifiant d'un élément de sécurité du premier dispositif communicant, l'élément de sécurité permettant d'identifier un utilisateur du premier dispositif, l'identifiant unique étant destiné en outre à être utilisé pour une authentification dudit premier dispositif, l'élément de sécurité étant une carte SIM ou une carte SIM logicielle.

Ainsi, la présente invention permet à un utilisateur de réseau social de conserver le contrôle en local de ses données d'utilisateur et prévoit notamment que :
- les données d'utilisateur sont stockées et gérées en local sur un dispositif communicant de l'utilisateur ;
- le réseau maillé du réseau social reste géré et stocké par une entité informatique du réseau social, telle que le serveur précité ;
- mais les données d'utilisateur ne sont plus accessibles lorsque le dispositif communicant n'est pas connecté et en ligne, ou que l'utilisateur a supprimé ces données d'utilisateur du dispositif communicant.

Une telle réalisation permet de s'assurer d'une bijection entre le noeud du réseau social et l'identifiant unique du dispositif, l'adresse IP du dispositif pouvant changer dans certains cas, mais une adresse IP courante restant affectée en permanence à l'identifiant unique. Ainsi, aucune ambiguïté ne vient altérer la relation créée entre le noeud représentant l'utilisateur dans la structure de réseau social, d'une part, et le dispositif communicant de l'utilisateur (représenté par son identifiant unique), d'autre part.

Dans une autre réalisation, un identifiant unique est également associé au deuxième dispositif. Une bijection est également réalisée entre l'identifiant unique du deuxième dispositif et le noeud lui correspondant dans le réseau social. Cet identifiant unique peut également être un identifiant d'un élément de sécurité, comme pour le premier dispositif.

Dans une réalisation, le serveur interroge le premier dispositif pour :
- déterminer si le premier dispositif est connecté et en ligne,
- et, le cas échéant, obtenir une adresse IP courante du premier dispositif à associer audit identifiant unique.

Ainsi, les données d'utilisateur ne sont plus accessibles lorsque le dispositif communicant n'est pas connecté et/ou en ligne, ou que l'utilisateur a supprimé ses données du dispositif communicant. On comprendra ainsi qu'un contrôle strict de la diffusion des données par cet utilisateur est possible par la mise en oeuvre de l'invention.

Dans une réalisation, le procédé peut comprendre en outre une étape de vérification de l'identifiant unique précité du premier dispositif lors d'une requête d'accès aux données stockées auprès du premier dispositif, ce qui renforce ainsi la sécurité de l'accès aux données d'utilisateur.

Dans une autre réalisation, le procédé peut également comprendre une étape de vérification de l'identifiant unique du deuxième dispositif précité lors de l'émission de la requête d'accès aux données stockées auprès du premier dispositif.

Dans une réalisation, le serveur interroge le premier dispositif pour déterminer si le premier dispositif est connecté et en ligne, et publie un message de non disponibilité du premier dispositif, au moins en cas de non accessibilité des données auprès du premier dispositif. Dans une telle réalisation, le dispositif communicant requérant ces données est néanmoins informé que leur accès est impossible, momentanément par exemple.

Avantageusement, dans une réalisation où le premier dispositif comporte une batterie d'alimentation électrique, un niveau de charge de la batterie est obtenu et comparé avec un seuil et, si le niveau est inférieur au seuil, le serveur reçoit une information de non disponibilité du premier dispositif et publie un message de non disponibilité du premier dispositif.

Dans une réalisation possible, le serveur peut interroger régulièrement le premier dispositif pour obtenir le niveau de charge de la batterie, et reçoit l'information de non disponibilité du premier dispositif dès lors que son niveau de batterie est inférieur au seuil. Un message de non disponibilité du premier dispositif est alors publié aux dispositifs communicants requérant les données d'utilisateur du premier utilisateur. Une telle réalisation permet, par exemple, de ne pas solliciter les ressources pour cette application, lorsqu'elles deviennent faibles, ou encore de ne pas risquer une interruption dans la communication des données du fait d'un arrêt d'alimentation du premier dispositif.

En variante ou en complément, le premier dispositif comportant la batterie d'alimentation électrique susmentionnée, peut vérifier son niveau de charge de batterie, le compare à au seuil précité, et, si le niveau est inférieur au seuil, informe le serveur, via l'information de non disponibilité, pour ne plus recevoir de requête de ses données d'utilisateur. Un message de non disponibilité du premier dispositif peut être envoyé par le serveur à un dispositif communicant requérant les données d'utilisateur du premier dispositif. Une telle réalisation permet par exemple de limiter la consommation de batterie inhérente aux communications des données d'utilisateur aux dispositifs les requérant. Ainsi, le premier utilisateur peut limiter sa consommation de batterie à partir d'un niveau de charge minimum, lui permettant par exemple de conserver une charge suffisante pour passer un appel d'urgence.

Dans une réalisation, une partie au moins des données d'utilisateurs sont stockées par le serveur pour, en cas d'indisponibilité du premier dispositif, être accessibles sur requête de consultation par le deuxième dispositif. Il peut s'agir typiquement de données publiques de l'utilisateur, très peu personnelles, pour ne pas devoir renvoyer un simple message d'erreur par exemple à un dispositif ne pouvant accéder au premier dispositif précité.

Dans une réalisation, une partie au moins des données d'utilisateur est exclusivement accessible à partir du premier dispositif et comporte des données personnelles parmi au moins :
- des données d'identité bancaire,
- et/ou des données d'état civil,
- et/ou des données audio et/ou d'images et/ou vidéos personnelles.

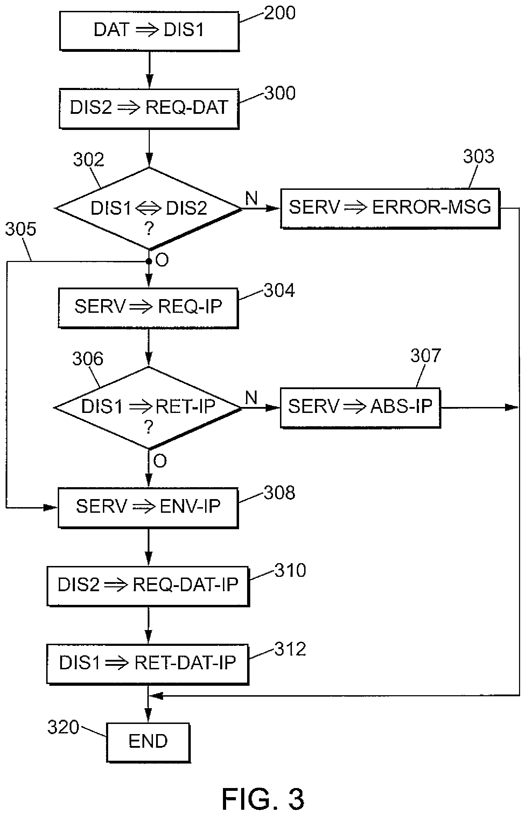

Le procédé ci-avant est mis en oeuvre par des moyens informatique, par exemple à partir d'un programme informatique déployé auprès du serveur du réseau social et auprès du premier dispositif précité. Ainsi, l'invention vise aussi un tel programme informatique comportant des instructions pour la mise en oeuvre du procédé ci-avant lorsque ce programme est exécuté par un processeur. A ce titre, on comprendra qu'un exemple d'organigramme de l'algorithme général de ce programme informatique peut être illustré à titre d'exemple par les figures 3 et/ou 4.

D'autres avantages et caractéristiques de l'invention apparaîtront à la lecture de la description détaillée ci-après d'exemples de réalisations présentés à titre illustratif, aucunement limitatifs, et en référence aux dessins annexés sur lesquels :
- la figure 1 illustre un exemple de réalisation d'un système impliquant les premier et deuxième dispositifs communicants précités, ainsi que le serveur du réseau social, ces différents éléments étant reliés par un ou plusieurs réseaux ;
- la figure 2 illustre une réalisation similaire à la figure 1, mais dans laquelle d'autres dispositifs tentent d'obtenir des données du premier dispositif ;
- la figure 3 illustre un exemple de réalisation du procédé au sens de l'invention, sous forme d'organigramme ;
- la figure 4 est un diagramme de séquences pour la mise en oeuvre du procédé selon la figure 3 ;
- la figure 5 illustre schématiquement un dispositif communicant pour la mise en oeuvre de l'invention ;
- la figure 6 illustre schématiquement un serveur pour la mise en oeuvre de l'invention.

Sur les figures, des références identiques correspondent à des éléments identiques.

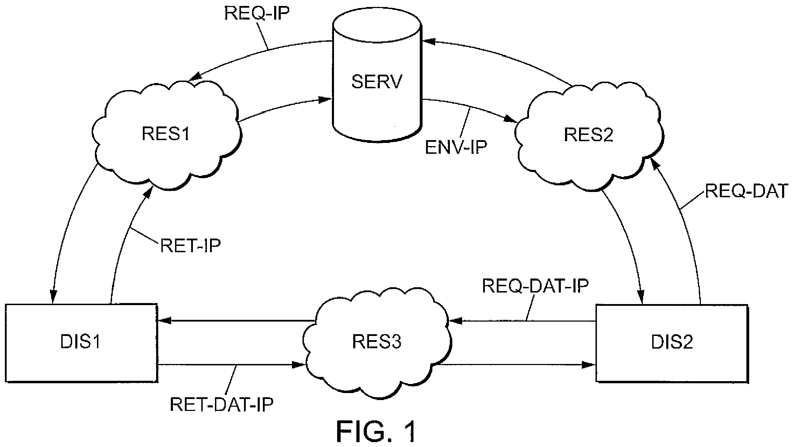

On se réfère à la figure 1 sur laquelle on a illustré le cas d'une transmission directe de données d'un premier utilisateur d'un premier dispositif communicant DIS1, à disposition de ce premier utilisateur, vers un dispositif communicant DIS2, à disposition d'un deuxième utilisateur. Les dispositifs communicants précités peuvent être des téléphones mobiles, des smartphones, des tablettes numériques, des ordinateurs, ou tout autre équipement électronique connecté à un réseau.

Pour cette mise en oeuvre, l'exemple de réalisation présenté sur la figure 1 implique ainsi :
- les premier et deuxième dispositifs communicants DIS1 et DIS2, chacun des deux dispositifs étant associés à un premier ID1 et deuxième ID2 identifiant respectivement,
- un serveur SERV, en tant qu'entité informatique gérant le stockage et les échanges informatiques de données d'utilisateurs du réseau social, et
- un ou plusieurs réseaux de communication RES1, RES2, RES3, entre ces différents éléments DIS1, DIS2, SERV.

Les réseaux RES1, RES2 et RES3 peuvent être des réseaux étendus de type Internet par exemple, basés sur des technologies de communication filaires et/ou non-filaires connues de l'Homme du métier.

Le dispositif communicant DIS2 requiert auprès du serveur SERV des données relatives à l'utilisateur du dispositif communicant DIS1, selon le message REQ-DAT. Le message REQ-DAT peut contenir les identifiants respectifs ID2 et ID1, respectivement du dispositif requêtant DIS2 et du dispositif requeté DIS1. Ces données peuvent avoir été stockées préalablement par le premier utilisateur et peuvent être par exemple :
- des données personnelles comme le profil de l'utilisateur, ses données d'identité, ses publications sur la page internet du réseau social, ou autre ;
- des données multimédia de type audio, photos, vidéos, ou autre ;
- des données de localisation ;
- ou autre.

Au sens de l'invention, les données du premier utilisateur sont initialement stockées en mémoire du premier dispositif communicant DIS1. En complément ou en variante, le premier utilisateur peut choisir de stocker en local sur son dispositif communicant tout ou partie de ses données d'utilisateurs, et de stocker les autres données sur un autre équipement communicant lui appartenant ou étant administré par un tiers de confiance (tel qu'un espace de stockage dématérialisé mis à disposition de l'utilisateur par un opérateur téléphonique par exemple). Selon une autre alternative, l'utilisateur peut aussi choisir de stocker tout ou partie de ses données d'utilisateur sur d'autres dispositifs communicants et/ou une entité informatique distante.

Selon une réalisation possible, l'utilisateur peut choisir de rendre accessible seulement une partie de ses données d'utilisateur stockées en local sur son dispositif communicant. Le cas échéant, le dispositif communicant comprend avantageusement un moyen de contrôle d'accès aux données tel qu'un pare-feu permettant de limiter l'accès des utilisateurs du réseau social, et/ou de tout autre dispositif communicant cherchant à accéder aux données stockées dans le premier dispositif, aux seules données rendues accessibles volontairement par l'utilisateur du dispositif. Le premier utilisateur peut ainsi être assuré que les autres utilisateurs du réseau social n'auront pas accès à d'autres données stockées sur son dispositif communicant. En outre, les risques d'atteintes à la confidentialité des données stockées sur le dispositif, par exemple via des attaques pirates de dispositifs communicants, sont alors limités.

Une partie au moins des données d'utilisateur peut être stockées par le serveur SERV pour, en cas d'indisponibilité du premier dispositif, être accessible sur requête de consultation par le deuxième dispositif. Ces données peuvent par exemple être des données minimales d'information sur le profil de l'utilisateur, voire un message d'absence ou encore des données permettant d'identifier l'utilisateur en vue qu'un potentiel contact puisse ensuite lui adresser une demande de mise en relation.

Le serveur SERV a recours à une base de données interne pour déterminer si, dans l'arborescence de mise en relation relative au réseau social, les utilisateurs respectifs des premier et deuxième dispositifs communicants sont bien en relation via un segment de l'arborescence (éventuellement à travers un ou plusieurs noeuds intermédiaires).

A cet effet, l'arborescence de mises en relation est organisée selon un réseau maillé comportant une pluralité de noeuds. Le serveur SERV, qui héberge le réseau social, associe à chaque noeud du réseau maillé un identifiant de dispositif communicant. Ainsi, un premier ID1 et un deuxième ID2 identifiant respectivement associés aux premier et deuxième dispositifs, déjà mentionnés plus tôt, sont stockés dans la base de données interne du serveur SERV. Dans une autre réalisation, ces identifiants peuvent être des identifiants unique, comme ceux associés à un module ou élément de sécurité comme une carte SIM. Cet identifiant peut être un numéro de téléphone ou l'IMSI (International mobile Subscriber Identity).

Le serveur consulte en outre la base précitée pour obtenir des coordonnées de contact du dispositif DIS1 du premier utilisateur. Ainsi, le serveur SERV est en mesure d'envoyer une requête au premier dispositif DIS1 pour obtenir l'adresse courante du premier dispositif DIS1 sur le réseau RES3 qui relie les premier et deuxième dispositifs communicants DIS1 et DIS2 (message REQ-IP de la figure 1). Il peut s'agir par exemple d'une adresse IP (pour « Internet Protocol »), notamment si le réseau RES3 est un réseau étendu tel que l'Internet. Sur réception de ce message REQ-IP, le premier dispositif DIS1 renvoie son adresse IP dans le message RET-IP. Le serveur SERV est alors en mesure de transmettre cette adresse IP au deuxième dispositif DIS2 (message ENV-IP).

Par ailleurs, le serveur peut stocker, à l'identifiant du premier dispositif DIS1 dans l'arborescence de mise en relation relative au réseau social, l'adresse du premier dispositif DIS1 sur le réseau de communication en cours d'utilisation par le premier dispositif.

Sur réception de l'adresse IP du premier dispositif DIS1, le deuxième dispositif DIS2 est maintenant en mesure de requérir directement auprès du dispositif DIS1 les données d'utilisateur (message REQ-DAT-IP).

Ainsi, le premier dispositif communicant DIS1 est en mesure de répondre à la requête directe du deuxième dispositif communicant DIS2 (message REQ-DAT-IP), en lui transmettant les données du premier utilisateur (message RET-DAT-IP).

L'utilisateur de réseau social conserve ainsi le contrôle en local de ses données d'utilisateur du réseau social et ne sont plus accessibles lorsque le dispositif communicant n'est pas connecté et en ligne, ou que l'utilisateur a supprimé ces données d'utilisateur du dispositif communicant.

En outre, on comprendra que l'utilisateur du premier dispositif peut rendre ses données d'utilisateur inaccessibles en se désabonnant du réseau social (suppression de cet utilisateur du graphe de noeud du réseau social), auquel cas les données qui sont restées stockées en local sur le dispositif ne sont plus atteintes par les autres utilisateurs et le serveur.

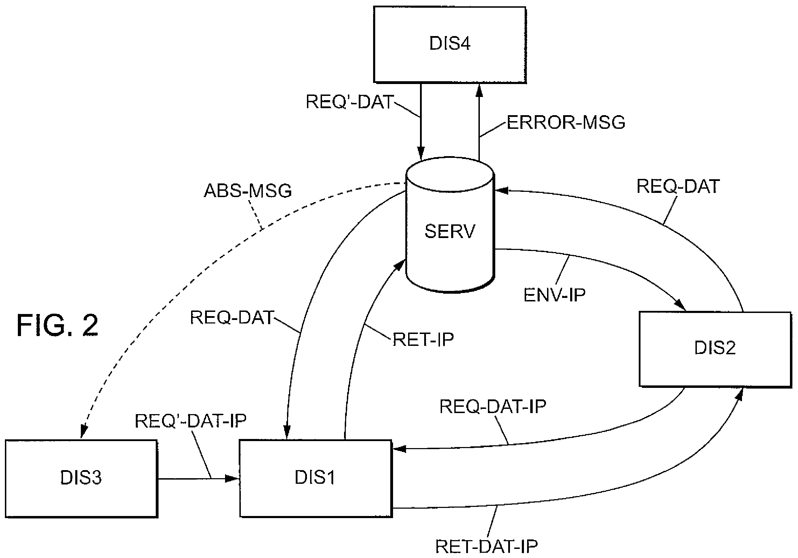

Sur la figure 2, on a rajouté à la figure 1 des exemples de situations où :
- un utilisateur d'un dispositif communicant tiers DIS4 n'a pas de segment le reliant au premier utilisateur dans le réseau social ; ici, la requête de données d'utilisateur auprès du serveur SERV (REQ'-DAT) sera rejetée, par exemple sous la forme d'un renvoi de message d'erreur ERROR-MSG ;
- un dispositif communicant DIS3 a bien reçu l'adresse IP du premier dispositif DIS1 mais le premier dispositif DIS1 n'est plus accessible via le réseau RES3 (dispositif éteint, non connecté, ou autre) ; dans ce cas, le dispositif communicant DIS3 ne reçoit pas de réponse du premier dispositif communicant DIS1, et suite à une temporisation, obtient du serveur SERV une information d'indisponibilité du premier dispositif communicant DIS1 (message ABS-MSG), ou éventuellement et le cas échéant une nouvelle adresse IP du dispositif communicant DIS1.

On indique ici que l'adresse IP habituelle d'un ordinateur relié au réseau commuté est souvent fixe, alors que celle d'un dispositif mobile (passant par exemple d'une cellule de réseau cellulaire à l'autre) peut dans certains cas avoir une adresse IP dynamique. Ainsi, le serveur SERV peut mettre en oeuvre une technique de traduction d'adresse, par exemple de type NAT (pour « Network Address Translation ») pour communiquer régulièrement une bonne adresse IP à des dispositifs la requérant. De cette manière, l'adresse IP du premier dispositif DIS1 qui est privée entre le serveur SERV et le dispositif DIS1, serait rendue visible pour des dispositifs requérants par le serveur SERV.

Par ailleurs, il peut être prévu un procédé de chiffrement des données pour les données échangées entre les dispositifs afin d'éviter toute atteinte d'entités informatiques intermédiaires à la confidentialité des données d'utilisateurs communiquées entre les dispositifs communicants.

Dans une réalisation possible, le premier dispositif DIS1, avant d'envoyer ses données d'utilisateur à un dispositif les requérant, il peut faire une requête auprès du serveur SERV afin d'identifier le dispositif requérant et vérifier qu'un segment de relation existe entre les deux dispositifs dans le réseau social. Ainsi, l'utilisateur peut s'assurer des personnes qui cherchent à consulter ses données et contrôle de manière sécurisée l'accès à celles-ci.

Le serveur SERV peut répertorier en outre le premier dispositif à l'aide d'un identifiant unique propre au premier dispositif, une adresse IP du premier dispositif étant associée à cet identifiant unique. L'adresse IP peut par exemple être l'adresse IP courante du premier dispositif sur le réseau auquel il est connecté ou, comme détaillé ci-après, une adresse IP fixe administrée par le serveur SERV. Cet identifiant unique peut être un identifiant mobile fourni par un élément de sécurité, par exemple, une carte SIM de téléphone, ou peut être tout type d'identifiant dématérialisé. Dans le cas d'un identifiant unique de carte SIM, le serveur SERV peut utiliser un protocole d'authentification comme EAP-SIM. Cette identité peut être vérifiée lors de chaque connexion au premier dispositif ou de chaque communication de ce dernier.

Une telle réalisation permet de s'assurer d'une bijection entre le dispositif communicant et l'identifiant unique du dispositif, l'adresse IP du dispositif pouvant changer dans certains cas, mais une adresse IP courante restant affectée en permanence à l'identifiant unique.

Dans une réalisation supplémentaire, le serveur SERV peut aussi répertorier tout autre dispositif, comme le deuxième dispositif DIS2, à l'aide d'un identifiant unique propre à tout autre dispositif. Cet identifiant unique peut être également un identifiant mobile fourni par un élément de sécurité, par exemple, une carte SIM de téléphone, ou peut-être tout type d'identifiant dématérialisé. Dans le cas d'un identifiant unique de carte SIM, le serveur SERV peut utiliser un protocole d'authentification comme EAP-SIM. Cette identité peut être vérifiée lors de chaque connexion du deuxième dispositif ou de chaque communication de ce dernier, comme par exemple lors de l'émission de la requête REQ-DAT décrite ci-dessous.

Une telle réalisation permet de s'assurer d'une bijection entre tout dispositif communicant et son identifiant unique du dispositif dans le réseau social. A chaque noeud du réseau est en effet associé un identifiant du dispositif mobile.

Dans une réalisation possible, le premier dispositif DIS1 comporte une batterie d'alimentation électrique dont il est possible d'obtenir un niveau de charge. Le serveur peut interroger régulièrement pour recevoir, ou recevoir spontanément du premier dispositif DIS1, une information de non disponibilité du dispositif dès lors que son niveau de batterie est inférieur à un seuil minimum de charge. Le serveur publie alors un message de non disponibilité du premier dispositif.

On a représenté sur la figure 3 des étapes d'un procédé selon un exemple possible de réalisation de l'invention. Le procédé commence tout d'abord par une étape préalable 200 de stockage durable (mémoire ROM typiquement) des données d'utilisateur auprès de son dispositif communicant DIS1.

Ensuite, au cours d'une étape courante 300, le deuxième dispositif DIS2 requiert auprès du serveur SERV les données d'utilisateur relatives à l'utilisateur du dispositif DIS1 en adressant le message REQ-DAT au serveur SERV. Le message/la requête REQ-DAT peut contenir les identifiants respectifs des dispositifs DIS1 et DIS2.

Lors d'une étape 302, le serveur SERV vérifie auprès d'une base de données interne comprenant l'arborescence de mise en relation des utilisateurs du réseau social, si un segment y existe entre les utilisateurs des premier et deuxième dispositifs communicants DIS1 et DIS2, par exemple en vérifiant si un segment existe entre leur noeud respectif caractérisé par leur identifiant ID1 et ID2 reçus dans la requête REQ-DAT.

Si l'issue du test de l'étape 302 est négatif (flèche N en sortie du test), les utilisateurs des premier et deuxième dispositifs ne sont pas en relation dans le réseau social. Le serveur SERV rejette alors à l'étape 303 la requête des données de l'utilisateur du dispositif DIS1, et envoie par exemple le message d'erreur ERROR-MSG.

Lors d'une issue positive du test à l'étape 302 (flèche O en sortie du test), les utilisateurs des premier et deuxième dispositifs sont bien renseignés dans la base de données du serveur comme étant en relation dans le réseau social. Le serveur SERV accepte la requête en provenance du deuxième dispositif DIS2. Le serveur SERV consulte la base de données interne pour obtenir les coordonnées du dispositif DIS 1 vérifie en l'occurrence qu'il a une adresse IP correspondant à l'identifiant du premier dispositif communicant DIS 1.

Lorsque le serveur SERV a sur sa base de données une adresse courante du premier dispositif DIS1 sur le réseau qui relie (directement ou indirectement) les premier et deuxième dispositifs communicants DIS1 et DIS2, le serveur SERV peut retourner directement (flèche 305) l'adresse du premier dispositif DIS1 selon un message ENV-IP (étape 308).

A une étape 304, le serveur SERV est aussi en mesure d'envoyer une requête au premier dispositif DIS1 selon un message REQ-IP pour obtenir l'adresse IP courante du premier dispositif DIS1 sur le réseau qui relie les premier et deuxième dispositifs communicants DIS1 et DIS2. Cette étape peut être effectuée répétitivement et régulièrement afin de tenir à jour l'adresse du premier dispositif DIS 1 stockée dans la base de données du serveur SERV.

Ensuite à l'étape 306, à la réception du message REQ-IP, le premier dispositif DIS1 renvoie son adresse IP selon le message RET-IP, lequel comprend les informations relatives à son adresse IP courante par exemple. Le serveur SERV est alors en mesure de transmettre cette adresse IP au deuxième dispositif DIS2 (message ENV-IP).

Toujours selon l'étape 306, le serveur SERV vérifie qu'une adresse du premier dispositif DIS1 est effectivement retournée via le message RET-IP. Cette interrogation permet par exemple de déterminer si le premier dispositif est connecté et en ligne et apte à fournir son adresse IP courante, laquelle peut alors être associée audit identifiant unique.

Ainsi, les données d'utilisateur ne sont plus accessibles lorsque le dispositif communicant n'est pas connecté et/ou en ligne, ou que l'utilisateur a supprimé ses données du dispositif communicant.

Lors d'une issue négative à la vérification de l'étape 306 (flèche N en sortie de l'étape 306), le premier dispositif DIS1 n'a pas retourné d'adresse en retour de la requête qui lui a été envoyée. Ce cas de figure peut notamment se présenter lorsque le premier dispositif n'est pas accessible parce qu'il est éteint ou qu'il n'a pas de réseau disponible lui permettant d'envoyer et recevoir les requêtes d'adresse précitées par exemple. Le cas échéant, le serveur SERV peut envoyer un message signalant l'absence (message ABS-MSG) du premier dispositif DIS1 au deuxième dispositif DIS2.

Lorsque l'issue de la vérification à l'étape 306 est positive (flèche 0 en sortie du l'étape 306), le serveur SERV a obtenu du premier dispositif DIS1 au moins une adresse IP de ce dispositif sur le réseau reliant les dispositifs DIS1 et DIS2, laquelle adresse est stockée en interne sur une base de données du serveur SERV à l'identifiant du premier dispositif DIS1 du graphe de noeud du réseau social.

Ensuite, à l'étape 308, le serveur SERV peut envoyer l'adresse récupérée selon le message ENV-IP au deuxième dispositif DIS2 afin que ce dernier puisse joindre le premier dispositif DIS 1 selon son adresse courante.

Dans une étape 310, le deuxième dispositif DIS2 requiert les données de l'utilisateur du premier dispositif DIS1 sur le réseau liant les premier et deuxième dispositifs communicants, selon une requête REQ-DAT-IP à l'adresse récupérée auprès du serveur.

Ensuite, à l'étape 312, le premier dispositif communicant DIS1 peut répondre à la requête directe du deuxième dispositif communicant DIS2, en lui transmettant les données du premier utilisateur selon un message RET-DAT-IP. Les données transmises peuvent être au moins une partie des données stockées au préalable dans le premier dispositif DIS1 à l'étape 200. A la réception du message RET-DAT-IP et des données transmises par le dispositif DIS1, le deuxième dispositif DIS2 peut afficher les données d'utilisateur du premier dispositif DIS1 sur une page internet de réseau social. Une telle page internet peut par exemple est affichée au deuxième utilisateur via une interface graphique se son dispositif.

On comprendra que la figure 3 n'est qu'un exemple de réalisation donné à titre illustratif. D'autres variantes peuvent être envisagées. Par exemple, dans le cas où le premier dispositif DIS1 a changé d'adresse sur le réseau liant les deux dispositifs communicants DIS1 et DIS2, les étapes 304 à 308 peuvent être procédées à nouveau afin que le deuxième dispositif DIS2 reçoive du serveur SERV la nouvelle adresse du premier dispositif DIS1 (via notamment un nouveau message ENV-IP).

Par exemple encore, à la réception par le premier dispositif DIS1 d'une requête reçue en direct du deuxième dispositif DIS2, le procédé peut comprendre une étape de vérification auprès du serveur SERV que la requête des données d'utilisateur reçue par le premier dispositif DIS1, provient bien d'un dispositif dont l'utilisateur à un segment en commun avec l'utilisateur du premier dispositif DIS1 dans le réseau social.

Dans une réalisation possible, l'utilisateur peut définir au préalable sur quel support il souhaite que ses données soient stockées. Ainsi, il peut avoir le choix entre stocker ses données d'utilisateur sur son dispositif communicant (tel qu'un téléphone mobile), sur un autre un autre dispositif communicant de l'utilisateur (tel qu'une tablette numérique) ou un espace de stockage distant de confiance (tel qu'un disque dur externe connecté ou un serveur d'opérateur téléphonique). A titre d'exemple, lors de l'étape d'initiation, l'utilisateur peut renseigner auprès du serveur SERV l'adresse IP de l'équipement auprès duquel il souhaite que ses données d'utilisateur soient sauvegardées. L'équipement choisi par l'utilisateur pour le stockage de ses données est renseigné auprès du serveur qui, pour l'identifiant de l'utilisateur enregistre l'équipement (par son adresse IP par exemple) où sont localisées les données d'utilisateur. Ensuite, les utilisateurs du réseau social seront automatiquement routés par le serveur SERV à l'adresse de l'équipement choisi pour consulter les données précitées.

Les dispositifs communicants peuvent recevoir au préalable une adresse IP fixe imposée par le serveur SERV et qui sera stockée :
- d'une part en mémoire du dispositif, et
- d'autre part, dans la base de données interne du serveur en correspondance des identifiants respectifs des dispositifs dans l'arborescence du réseau social.

Ainsi, le serveur détermine un graphe de noeuds permettant de rediriger les dispositifs communicants à des adresses fixes pour consulter les données d'autres utilisateurs. Par ailleurs, compte tenu de ce qui précède, on comprendra que le graphe de noeuds peut renseigner sur la localisation des données d'utilisateurs parmi un ou plusieurs dispositifs communicants possibles.

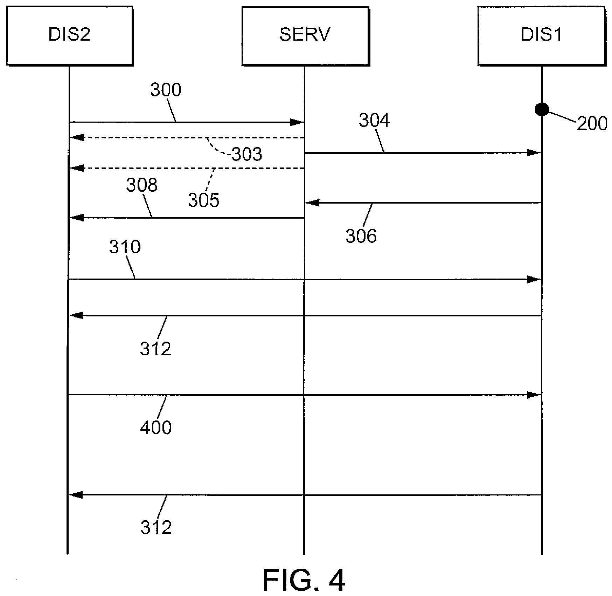

On a représenté sur la figure 4 un exemple de diagramme de séquences d'échanges possibles entre les éléments DIS1, DIS2 et DIS3 à l'issue d'étapes du procédé représenté à la figure 3.

Prenons par exemple un cas de figure dans lequel un utilisateur du deuxième dispositif DIS2 a récemment établi un lien au sein du réseau social avec l'utilisateur du premier dispositif DIS1, et qu'il veut consulter pour la première fois les données d'utilisateur de ce dernier. Selon un mode de réalisation possible, les étapes suivantes peuvent être mises en oeuvre à cet effet :
- 200 : L'utilisateur du premier dispositif DIS1 enregistre au préalable ses données d'utilisateur sur un moyen de stockage durable de son dispositif communicant et choisi de les stocker en local ;
- 300 : L'utilisateur du deuxième dispositif DIS2 souhaite consulter les données d'utilisateur du premier dispositif DIS1 et envoie une requête à cet effet au serveur SERV ;
- 308 : Le serveur SERV constate d'après sa base de données interne, que les utilisateurs des premier et deuxième dispositifs ont un segment social en commun dans le réseau social et envoie l'adresse IP courante du dispositif DIS1 sur le réseau liant les deux dispositifs DIS1 et DIS2, laquelle adresse peut être déjà stockée dans la base de données du serveur, ou mise à jour selon les étapes 304 et 306 susmentionnées ;
- 310 : L'utilisateur récupère via le serveur SERV l'adresse IP lui permettant de joindre directement le premier dispositif DIS1 et de faire la requête des données d'utilisateur souhaitées ;
- 312 : Le premier dispositif DIS1 reçoit la requête et retourne les données d'utilisateurs demandées par le deuxième dispositif DIS2.

Pour que le serveur conserve une base de données à jour avec, pour chacun des utilisateurs du réseau social, une adresse courante de leur dispositif communicant, il peut être prévu que les étapes 304 et 306 soient procédées régulièrement selon une méthode de type « polling » (interrogation régulière de clients notamment pour déterminer les mises à jour système à effectuer).

Lorsque le serveur ne parvient pas à obtenir un retour du premier dispositif, le serveur peut envoyer un message d'absence (selon l'étape 305) au dispositif demandeur des données d'utilisateur du premier dispositif DIS1.

Par ailleurs, lorsque le deuxième dispositif DIS2 a déjà obtenu l'adresse du premier dispositif DIS1 auprès du serveur SERV, on comprendra que le deuxième dispositif DIS2 peut directement redemander les données d'utilisateur souhaitées via une nouvelle requête à l'adresse récupérée (étape 400). Les données d'utilisateur à jour lui sont alors transmises en retour (étape 312).

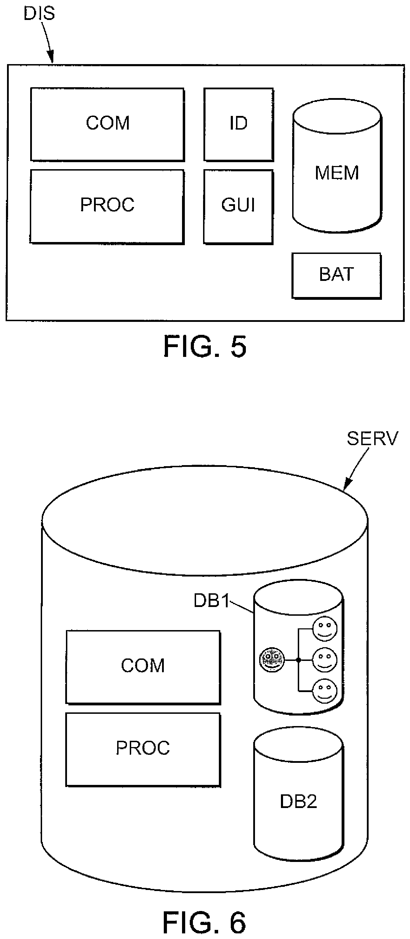

A la figure 5, on a illustré schématiquement un dispositif communicant DIS selon l'invention. Le dispositif comporte au moins :
- des moyens de stockage tels qu'une mémoire MEM pouvant être durable et non-volatile (mémoire ROM par exemple) ;
- des moyens de communication d'une adresse IP sur requête d'un serveur et pouvant se présenter sous la forme d'une interface de communication COM sans-fil et/ou filaire comportant par exemple un module radiofréquence de télécommunication, un module Wi-Fi, Bluetooth ou autre ;
- un moyen de traitement de données PROC de type processeur permettant la transmission des données d'utilisateur sur requête d'un dispositif communicant formulée à l'adresse du dispositif ;
- une interface graphique GUI permettant de :
   ∘ afficher au moins une page internet de réseau social,
   ∘ visualiser les données stockées dans les moyens de stockage du dispositif,
   ∘ consulter les données d'utilisateurs du réseau social,
- un élément de sécurité ID du dispositif communicant permettant d'authentifier le dispositif avec un identifiant unique, tel qu'une carte SIM ou carte SIM logicielle,
- d'une batterie d'alimentation électrique BAT.

A la figure 6, on a illustré schématiquement un serveur SERV selon l'invention. Le serveur comporte au moins :
- des moyens de stockage dont par exemple :
   ∘ une première base de données DB1 destinées à stocker l'arborescence en graphe de noeuds du réseau social, avec en correspondance de chaque noeud un identifiant des dispositifs liés au réseau social, une adresse IP de ces dispositifs, et un identifiant unique associé à chaque dispositif ;
   ∘ une deuxième base de données DB2 destinée à stocker d'autres données relatives au réseau social et des données d'utilisateur de dispositifs dont l'utilisateur n'aura pas souhaité stocker ses données en local sur son dispositif ;
- des moyens de communication d'une adresse IP sur requête d'un dispositif communicant et pouvant se présenter sous la forme d'une interface de communication COM sans-fil et/ou filaire comportant par exemple un module radiofréquence de télécommunication, un module Wi-Fi, Bluetooth ou autre ;
- des moyens de traitement des données PROC notamment pour :
   ∘ l'association d'au moins un identifiant d'un dispositif communicant avec une adresse IP ;
   ∘ la vérification que le réseau maillé comporte une relation entre des noeuds correspondant aux identifiants des dispositifs des utilisateurs du réseau social ;
   ∘ la transmission, via l'interface de communication COM, de l'adresse IP du premier dispositif au deuxième dispositif, pour un accès direct aux données d'utilisateur auprès du premier dispositif et en utilisant l'adresse IP transmise.

Le serveur est prévu en outre pour vérifier l'association entre l'utilisateur et l'identifiant unique des dispositifs relativement à un élément de sécurité du dispositif communicant (une carte SIM ou carte SIM logicielle du dispositif par exemple).

Bien entendu, la présente invention a été décrite selon quelques exemples mais peut s'appliquer à d'autres réalisations qui apparaitront à l'homme du métier. A titre d'exemple, les données d'utilisateurs accessibles par un dispositif communicant sont les données vidéo issues en temps réel d'une caméra du dispositif communicant accédé, par exemple selon un flux de données vidéo en streaming.

Par ailleurs, des fonctions complémentaires relatives aux données d'utilisateur, comme par exemple une fonction d'espace de stockage sécurisé agissant de type coffre fort de données, peuvent être implémentées.

## Revendications

1. Procédé de traitement de données d'utilisateur destinées à un affichage sur une page internet d'un réseau social, dans lequel :
- lesdites données d'utilisateur sont stockées dans un premier dispositif communicant (DIS1) et sont consultables à distance par au moins un deuxième dispositif communicant (DIS2),
- le réseau social est organisé selon un réseau maillé comportant une pluralité de noeuds, et un serveur (SERV) hébergeant le réseau social associe à chaque noeud du réseau maillé un identifiant de dispositif communicant, un premier et un deuxième identifiant respectivement associés aux premier et deuxième dispositifs étant stockés auprès dudit serveur, et
- le serveur (SERV) stocke en outre à l'identifiant du premier dispositif une adresse IP du premier dispositif sur un réseau de communication en cours d'utilisation par le premier dispositif (DIS1),
le procédé comprenant, sur requête de consultation des données d'utilisateur (REQ-DAT) par le deuxième dispositif (DIS2), au moins les étapes :
- de vérification (302) par le serveur que le réseau maillé comporte une relation entre les noeuds correspondant respectivement aux premier et deuxième identifiants ;
- et, le cas échéant, de transmission (ENV-IP) par le serveur de l'adresse IP du premier dispositif (DIS1) au deuxième dispositif (DIS2), pour un accès direct auxdites données d'utilisateur auprès du premier dispositif et en utilisant l'adresse IP transmise ;
- dans lequel le serveur (SERV) répertorie en outre le premier dispositif (DIS1) à l'aide d'un identifiant unique propre au premier dispositif, une adresse IP courante du premier dispositif étant associée audit identifiant unique,
le procédé étant **caractérisé en ce que** l'identifiant unique propre au premier dispositif (DIS1) est un identifiant d'un élément de sécurité du premier dispositif communicant, l'identifiant unique étant destiné en outre à être utilisé pour une authentification dudit premier dispositif, l'élément de sécurité étant une carte SIM ou une carte SIM logicielle.

2. Procédé selon la revendication 1, dans lequel le serveur (SERV) interroge le premier dispositif (DIS1) pour obtenir l' adresse IP courante du premier dispositif à associer audit identifiant unique, le premier dispositif étant déterminé comme étant connecté et en ligne lorsque le premier dispositif renvoie en réponse ladite adresse.

3. Procédé selon l'une des revendications 1 et 2, comprenant en outre une étape de vérification de l'identifiant unique du premier dispositif lors d'une requête d'accès aux données stockées auprès du premier dispositif.

4. Procédé selon l'une des revendications précédentes, dans lequel le serveur (SERV) interroge le premier dispositif (DIS1) pour déterminer si le premier dispositif est connecté et en ligne, et publie un message de non disponibilité du premier dispositif (ABS-MSG), au moins en cas de non accessibilité des données auprès du premier dispositif.

5. Procédé selon l'une des revendications précédentes, dans lequel, le premier dispositif (DIS1) comportant une batterie d'alimentation électrique (BAT) :
- un niveau de charge de la batterie est obtenu et comparé avec un seuil, et
- si le niveau est inférieur au seuil, le serveur reçoit une information de non disponibilité du premier dispositif et publie un message de non disponibilité du premier dispositif.

6. Procédé selon l'une des revendications précédentes, dans lequel au moins une partie des données d'utilisateurs sont stockées par le serveur (SERV) pour, en cas d'indisponibilité du premier dispositif (DIS1), être accessibles sur requête de consultation par le deuxième dispositif (DIS2).

7. Procédé selon l'une des revendications précédentes, dans lequel une partie au moins des données d'utilisateur est exclusivement accessible à partir du premier dispositif (DIS1) et comporte des données personnelles parmi au moins :
- des données d'identité bancaire,
- et/ou des données d'état civil,
- et/ou des données audio et/ou d'images et/ou vidéos personnelles.

8. Programme informatique comportant des instructions pour la mise en oeuvre du procédé selon l'une des revendications 1 à 7, lorsque ce programme est exécuté par un processeur.

## Patentansprüche

1. Verfahren zur Verarbeitung von Benutzerdaten, die für eine Anzeige auf einer Internetseite eines sozialen Netzwerks bestimmt sind, wobei:
- die Benutzerdaten in einer ersten kommunizierenden Vorrichtung (DIS1) gespeichert sind und durch wenigstens eine zweite kommunizierende Vorrichtung (DIS2) fernabrufbar sind,
- das soziale Netzwerk als ein Maschennetzwerk organisiert ist, das mehrere Knoten aufweist, und ein Server (SERV), der das soziale Netzwerk hostet, jedem Knoten des Maschennetzwerks eine Kennung einer kommunizierenden Vorrichtung zuordnet, wobei eine erste und eine zweite Kennung, die der ersten bzw. zweiten Vorrichtung zugeordnet sind, in dem Server gespeichert sind, und
- der Server (SERV) außerdem mit der Kennung der ersten Vorrichtung eine IP-Adresse der ersten Vorrichtung in einem Kommunikationsnetz, das von der ersten Vorrichtung (DIS1) aktuell verwendet wird, speichert,
wobei das Verfahren, auf eine Anforderung zum Abrufen der Benutzerdaten (REQ-DAT) durch die zweite Vorrichtung (DIS2) hin, wenigstens die Schritte umfasst:
- einer Überprüfung (302), durch den Server, ob das Maschennetzwerk eine Beziehung zwischen den Knoten aufweist, die der ersten bzw. zweiten Kennung entsprechen;
- und gegebenenfalls einer Übertragung (ENV-IP), durch den Server, der IP-Adresse der ersten Vorrichtung (DIS1) an die zweite Vorrichtung (DIS2), für einen direkten Zugriff auf die Benutzerdaten an der ersten Vorrichtung und unter Verwendung der übertragenen IP-Adresse;
- wobei der Server (SERV) außerdem die erste Vorrichtung (DIS1) mithilfe einer der ersten Vorrichtung eigenen eindeutigen Kennung verzeichnet, wobei eine aktuelle IP-Adresse der ersten Vorrichtung dieser eindeutigen Kennung zugeordnet ist,
wobei das Verfahren **dadurch gekennzeichnet ist, dass** die der ersten Vorrichtung (DIS1) eigene eindeutige Kennung eine Kennung eines Sicherheitselements der ersten kommunizierenden Vorrichtung ist, wobei die eindeutige Kennung außerdem dazu bestimmt ist, für eine Authentifizierung der ersten Vorrichtung verwendet zu werden, wobei das Sicherheitselement eine SIM-Karte oder eine Software-SIM-Karte ist.

2. Verfahren nach Anspruch 1, wobei der Server (SERV) die erste Vorrichtung (DIS1) abfragt, um die aktuelle IP-Adresse der ersten Vorrichtung zu erhalten, die der eindeutigen Kennung zuzuordnen ist, wobei die erste Vorrichtung als verbunden und online bestimmt wird, wenn die erste Vorrichtung als Antwort die Adresse zurücksendet.

3. Verfahren nach einem der Ansprüche 1 und 2, welches außerdem einen Schritt der Überprüfung der eindeutigen Kennung der ersten Vorrichtung bei einer Anforderung des Zugriffs auf die in der ersten Vorrichtung gespeicherten Daten umfasst.

4. Verfahren nach einem der vorhergehenden Ansprüche, wobei der Server (SERV) die erste Vorrichtung (DIS1) abfragt, um zu bestimmen, ob die erste Vorrichtung verbunden und online ist, und wenigstens in dem Falle, wenn die Daten in der ersten Vorrichtung nicht zugreifbar sind, eine Nachricht über die Nichtverfügbarkeit der ersten Vorrichtung (ABS-MSG) veröffentlicht.

5. Verfahren nach einem der vorhergehenden Ansprüche, wobei, wenn die erste Vorrichtung (DIS1) eine Batterie zur Stromversorgung (BAT) aufweist:
- ein Ladezustand der Batterie erhalten und mit einem Schwellenwert verglichen wird, und
- falls der Ladezustand niedriger als der Schwellenwert ist, der Server eine Information über die Nichtverfügbarkeit der ersten Vorrichtung empfängt und eine Nachricht über die Nichtverfügbarkeit der ersten Vorrichtung veröffentlicht.

6. Verfahren nach einem der vorhergehenden Ansprüche, wobei wenigstens ein Teil der Daten von Benutzern von dem Server (SERV) gespeichert wird, damit sie im Falle einer Nichtverfügbarkeit der ersten Vorrichtung (DIS1) auf eine Anforderung zum Abrufen durch die zweite Vorrichtung (DIS2) hin zugreifbar sind.

7. Verfahren nach einem der vorhergehenden Ansprüche, wobei wenigstens ein Teil der Benutzerdaten ausschließlich von der ersten Vorrichtung (DIS1) aus zugreifbar ist und persönliche Daten aus mindestens folgenden umfasst:
- Bankverbindungsdaten,
- und/oder Daten zum Personenstand,
- und/oder persönliche Audiodaten und/oder Bilddaten und/oder Videos.

8. Computerprogramm, welches Anweisungen zur Durchführung des Verfahrens nach einem der Ansprüche 1 bis 7, wenn dieses Programm von einem Prozessor ausgeführt wird, umfasst.

## Claims

1. Method for processing user data intended for display on an Internet page of a social network, in which:
- said user data are stored in a first communicating device (DIS1) and are consultable remotely by at least one second communicating device (DIS2),
- the social network is organized according to a meshed network comprising a plurality of nodes, and a server (SERV) hosting the social network associates a communicating device identifier with each node of the meshed network, a first and a second identifier respectively associated with the first and second devices being stored at said server, and
- the server (SERV) furthermore stores at the identifier of the first device an IP address of the first device on a communication network currently being used by the first device (DIS1),
the method comprising, on request for consultation of the user data (REQ-DAT) by the second device (DIS2), at least the steps:
- of verification (302) by the server that the meshed network comprises a relation between the nodes corresponding respectively to the first and second identifiers;
- and, if relevant, of transmission (ENV-IP) by the server of the IP address of the first device (DIS1) to the second device (DIS2), for direct access to said user data at the first device and by using the IP address transmitted;
- in which the server (SERV) furthermore catalogues the first device (DIS1) with the aid of a unique identifier specific to the first device, a current IP address of the first device being associated with said unique identifier,
the method being **characterized in that**
the unique identifier specific to the first device (DIS1) is an identifier of a security element of the first communicating device, the unique identifier being intended furthermore to be used for an authentication of said first device, the security element being an SIM card or a software SIM card.

2. Method according to Claim 1, in which the server (SERV) interrogates the first device (DIS1) to obtain the current IP address of the first device to be associated with said unique identifier, the first device being determined as being connected and on-line when the first device returns said address in response.

3. Method according to one of Claims 1 and 2, further comprising a step of verifying the unique identifier of the first device upon a request for access to the stored data at the first device.

4. Method according to one of the preceding claims, in which the server (SERV) interrogates the first device (DIS1) to determine whether the first device is connected and on-line, and publishes a message of non-availability of the first device (ABS-MSG), at least in case of non-accessibility of the data at the first device.

5. Method according to one of the preceding claims, in which, the first device (DIS1) comprising an electrical supply battery (BAT):
- a charge level of the battery is obtained and compared with a threshold, and
- if the level is lower than the threshold, the server receives an information item of non-availability of the first device and publishes a message of non-availability of the first device.

6. Method according to one of the preceding claims, in which at least some of the data of users is stored by the server (SERV) to, in case of unavailability of the first device (DIS1), be accessible on request for consultation by the second device (DIS2).

7. Method according to one of the preceding claims, in which some at least of the user data is exclusively accessible from the first device (DIS1) and comprises personal data from among at least:
- bank identity data,
- and/or civil status data,
- and/or personal audio data and/or image data and/or videos.

8. Computer program comprising instructions for the implementation of the method according to one of Claims 1 to 7, when this program is executed by a processor.
